# EUROPEAN PATENT APPLICATION

(11) **EP 4 790 807 A1**
(43) Date of publication of application: **12.08.2026**
(21) Application number: 25156322.7
(22) Date of filing: 06.02.2025
(51) Int. Cl.: H01M 50/213, H01M 50/503, H01M 50/509, H01M 50/516, H01M 50/522

(54) **CELL CONNECTOR FOR A 4P CONNECTION OF CYLINDRICAL CELLS**

(71) Applicant: MAN Truck & Bus SE, 80995 München (DE)
(72) Inventor: Chavande, Onkar, 416707 Maharashtra (IN)

(57) **Abstract**

The invention relates to a cell connector (10A, 10B, 10C) for electrically connecting eight cylindrical cells (22) for an electrical energy storage device. The cell connector (10A, 10B, 10C) comprises exactly four positive contact portions (12a, 12b, 12c, 12d), each configured to electrically contact a positive terminal (22a) of one of the eight cylindrical cells (22). The cell connector (10A, 10B, 10C) further comprises exactly four negative contact portions (14a, 14b, 14c, 14d), each configured to electrically contact a negative terminal (22b) of one of the eight cylindrical cells (22). The cell connector (10A, 10B, 10C) further comprises a connecting portion (16), via which the four positive contact portions (12a, 12b, 12c, 12d) and the four negative contact portions (14a, 14b, 14c, 14d) are physically and electrically connected to each other.

## Description

The invention relates to a cell connector for electrically connecting cylindrical cells and an electrical energy storage device comprising such a cell connector.

In modern battery technology, individual battery cells are usually connected in series or parallel configurations within a battery pack to achieve the desired voltage and capacity. Typically, cell connectors made from conductive metals such as nickel, copper, or aluminium are used for these electrical connections. These cell connectors typically link a positive terminal of one of the battery cells to a negative terminal of another one of the battery cells.

However, the common one-to-one linking of battery cells has some drawbacks. It requires a large number of cell connectors and a significant amount of welding. Additionally, the battery management system, which monitors the state of the battery cells, needs numerous sensor connections - potentially one for each cell connector - to monitor cell voltage, current, and temperature.

It is an object of the invention to provide an improved solution for electrically connecting battery cells, preferably aiming to overcome the disadvantages and limitations of conventional techniques. Preferably, it is an object of the invention to provide a solution that requires fewer components, making the interconnection simpler, faster, and more cost-effective.

These objectives are solved by the subject matter of the independent claims. Preferred embodiments and applications of the invention result from the dependent claims.

According to a first general aspect of the disclosure, a cell connector (e.g., also referred to as interconnect, tab, and/or busbar) is provided. Preferably, the cell connector is a cell connector for electrically connecting eight (e.g., identical) cylindrical cells (e.g., Lithium ion cylindrical cells) for an electrical energy storage device (e.g., a battery module). Consequently, the cell connector may be made from an electrically conductive material, e.g. copper, brass, or aluminium.

The cell connector comprises exactly four (e.g., flat) positive contact portions, each configured to electrically contact a positive terminal of one of the eight cylindrical cells.

The cell connector further comprises exactly four (e.g., flat) negative contact portions, each configured to electrically contact a negative terminal of one of the eight cylindrical cells.

The connector further comprises a (e.g., flat) connecting portion (e.g., in the form of a three-beam star), via which the four positive contact portions and the four negative contact portions are physically and/or electrically connected to each other. Preferably, the connecting portion physically (e.g., structurally) and electrically connects each of the positive contact portions to each of the other positive contact portions and each of the negative contact portions. In addition or alternatively, the connecting portion preferably physically (e.g., structurally) and electrically connects each of the negative contact portions to each of the other negative contact portions and each of the positive contact portions.

Advantageously, this cell connector (or several of these) allows for fast and simple series and parallel connection of the cylindrical cells, such that a cluster of four cylindrical cells is connected in parallel and several of these clusters are then connected in series, e.g. in a daisy chain structure. By connecting eight cells simultaneously, the number of connectors can be reduced compared to conventional one-to-one linking. Moreover, the monitoring of the cells is simplified, as a single sensor can be placed on each cell connector, measuring readings on eight cells at a time. Consequently, by using the claimed cell connector, the total number of components required in the cell module layout can be advantageously reduced, leading to significant reductions in assembly time, costs, and overall complexity.

According to an aspect, the positive contact portions and the negative contact portions may be formed differently, e.g. having a different shape and/or size. For example, the positive contact portions may be larger in size compared to the negative contact portions. In addition or alternatively, the positive contact portions may have an essentially disc-like shape, while the negative contact portions may have an essentially elongated shape. Advantageously, this allows the positive and negative contact portions to be optimally adapted to the respective (positive or negative) terminal shape in order to ensure a good electrical contact.

According to another aspect, the positive contact portions may be identically formed and/or each comprise a (e.g., circularly) widened free end. For example, the (e.g., circularly) widened free end may have a diameter D between 15 mm and 17 mm. Preferably, the (e.g., circularly) widened free end may each be connected to the connecting portion via a straight strip section of each of the positive contact portions. Thus, the positive contact portions may have gecko foot like structure. Advantageously, this allows a large contact surface between the positive contact portions and the (positive) terminals to be provided.

According to another aspect, the negative contacting portions may each have a (e.g., curved) strip-like shape, a (e.g., curved) cantilever-like shape, and/or a (e.g., curved) tongue-like shape. For example, each of the negative contacting portions may have an aspect ratio, i.e. a ratio of (e.g., curved) length to width, of at least 2:1, preferably 3:1. Particularly preferred, two of the negative contacting portions may be longer than the other two negative contacting portions. For example, the negative contacting portions may not be identical. Advantageously, this allows for good contacting of the (negative) terminals.

According to another aspect, the cell connector may be made of (e.g., sheet) metal (e.g., copper, brass, and/or aluminium) and/or may have a material thickness t of less than 3 mm, e.g. between 1 mm and 2 mm. Advantageously, a lightweight and robust cell connector can be provided.

According to another aspect, the cell connector may be essentially flat. For example, the cell connector may have an essentially two-dimensional shape and/or lateral dimensions significantly larger than its thickness. In addition or alternatively, the cell connector may have a height H less than 8 mm, preferably less than 6 mm. Advantageously, this allows for a space-saving integration of the cell connector in the electrical energy storage device.

According to another aspect, the cell connector may be integrally formed as a unitary component. For example, the cell connector may be a single piece, which preferably cannot be non-destructively separated into smaller components. Advantageously, this simplifies production of the cell connector.

According to another aspect, the cell connector may be punched, milled, laser-cut, and/or water jet-cut from a flat material. Again, this advantageously simplifies production.

According to another aspect, the positive contact portions and/or the negative contacting portions may each be connected to the connecting portion via a step portion of the cell connector, e.g. (each) having a step height h between 2 mm and 4 mm. Preferably, all positive contact portions and all negative contacting portions are connected to the connecting portion via respective (e.g., identical) step portions. However, it is also possible that only some of the positive contact portions and/or only some of the negative contacting portions are connected to the connecting portion via respective step portions. Advantageously, his allows for an overall flat cell connector geometry, where unnecessary contact points between the cell connector and the cylindrical cells can be avoided.

According to another aspect, the positive contacting portions are arranged offset in height to the connecting portion (e.g., below with respect to a vertical axis). Preferably, all the (e.g., planar) positive contacting portions are arranged at the same (e.g., vertical) height and/or at the same (e.g., vertical) level. For example, the positive contacting portions may all be arranged within a same plane. Advantageously, also this allows for an overall flat cell connector geometry, where unnecessary contact points between the cell connector and the cylindrical cells can be avoided.

According to another aspect, the negative contacting portions are arranged offset in height to the connecting portion (e.g., below with respect to a vertical axis). Preferably, all the (e.g., planar) negative contacting portions are arranged at the same (e.g., vertical) height and/or at the same (e.g., vertical) level. For example, the negative contacting portions may all be arranged within a same plane. Advantageously, this again allows for an overall flat cell connector geometry, where unnecessary contact points between the cell connector and the cylindrical cells can be avoided.

According to another aspect, the positive contact portions and the connecting portion may be integrally connected to each other. For example, the positive contact portions and the connecting portion may not be non-destructively separable from each other and/or may not be assembled from multiple parts. Advantageously, this simplifies production of the cell connector.

According to another aspect, each positive contact portion may comprise a straight strip section and/or a circular section. Preferably, the respective straight strip section and circular section may (e.g., smoothly) merge into each other and/or connect to each other. Each straight strip section may, for example, be directly connected to one of the step portions and/or may, for example, be arranged (e.g., directly) between one of the circular sections and one of the step portions. Advantageously, the circular section may offer a broader contact area, enhancing the overall contact reliability and reducing potential wear and tear, while the straight strip section advantageously provides a material-saving connection and allows a certain degree of flexibility.

According to another aspect, the positive contact portions (e.g., the centres of their circular sections) may be arranged in a two-dimensional (e.g., quasi-hexagonal) grid. For example, the grid may resemble a slightly distorted hexagonal (honeycomb) structure. Preferably, the positive contact portions (e.g., the centres of their circular sections) may form a parallelogram (unit cell) having sides of essentially equal length, wherein the angles between the sides are essentially 120° or 60°, respectively. Advantageously, this enables a high packing density of the corresponding cylindrical cells.

According to another aspect, the negative contact portions and the connecting portion may be integrally connected to each other. For example, the negative contact portions and the connecting portion may not be non-destructively separable from each other and/or may not be assembled from multiple parts. Advantageously, this simplifies production of the cell connector.

According to another aspect, each negative contact portion may have a tapered free end. For example, each negative contact portion may narrow and/or may not have a constant width. Advantageously, this provides a material-saving connection to the negative terminals.

According to another aspect, each negative contact portion may have a curved shape. For example, each negative contact portion may smoothly bend. Preferably, each negative contact portion may have a curved shape having an inner radius of curvature between 15 mm and 17 mm. Advantageously, this enables a form-fitting adaptation to the cell shape.

According to another aspect, the connecting portion may comprise a (e.g., elongated and/or strip-like) positive arm section, preferably projecting (e.g., extending) away from a centre section of the connecting portion. The positive arm section may, for example, have a curved and/or hook-shaped positive arm section. At least two of the four positive contact portions may be (e.g., physically and/or electrically) connected (e.g., fixed) to the positive arm section. Preferably, the at least two positive contact portions and the positive arm section may be integrally formed as a unitary component, e.g. have a continuous material structure. Advantageously, by using the positive arm section, the respective positive contact portions can be held stable at a certain distance from each other.

According to a variant, one of the at least two positive contact portions may be connected to a distal end of the positive arm section. Preferably, the one of the at least two positive contact portions may be arranged at the far end of the positive arm section and/or opposite to a proximal end of the positive arm section, connected to the centre section.

In addition or alternatively, (e.g., another) one of the at least two positive contact portions may be connected to a lateral side of the positive arm section. For example, the one of the at least two positive contact portions may be connected to a side surface of the positive arm section, extending between a top side and a bottom side of the positive arm section.

In addition or alternatively, the at least two positive contact portions may each project (e.g., extend) away from the positive arm section. For example, the at least two positive contact portions may each have a first positive contact portion end connected to the positive arm section and an (e.g., opposite) free end.

In addition or alternatively, a width of the positive arm section may vary along a length of the positive arm section, e.g. decrease with increasing distance from the centre section. For example, the positive arm section may become narrower with increasing distance from the centre section.

According to another aspect, the connecting portion may comprise a (e.g., elongated and/or strip-like) negative arm section, preferably projecting (e.g., extending) away from a (or the) centre section of the connecting portion. The negative arm section may, for example, have a curved and/or hook-shaped negative arm section. Preferably, exactly three of the negative contact portions may be (e.g., physically and/or electrically) connected (e.g., fixed) to the negative arm section. Preferably, the three negative contact portions and the negative arm section may be integrally formed as a unitary component, e.g. have a continuous material structure. Advantageously, by using the negative arm section, the respective negative contact portions can be held stable at a certain distance from each other.

According to a variant, one of the three negative contact portions may be connected to a distal end of the negative arm section. Preferably, the one of the three negative contact portions may be arranged at the far end of the negative arm section and/or opposite to a proximal end of the negative arm section, connected to the centre section.

In addition or alternatively, (e.g., another) two of the three negative contact portions may be connected to a lateral side of the negative arm section. For example, the two of the three negative contact portions may be connected to a side surface of the negative arm section, extending between a top side and a bottom side of the negative arm section. Preferably, the two of the three negative contact portions may be arranged quasi-parallel and/or next to each other.

In addition or alternatively, the three negative contact portions may each project (e.g., extend) away from the negative arm section. For example, the three negative contact portions may each have a first negative contact portion end connected to the negative arm section and an (e.g., opposite) free end.

In addition or alternatively, a width of the negative arm section may vary along a length of the negative arm section, e.g. decrease with increasing distance from the centre section. For example, the negative arm section may become narrower with increasing distance from the centre section.

In addition or alternatively, the negative arm section may comprise at least one arc region (e.g., circular arc region). For example, the region may (e.g., at least partially) be delimited by an arc and/or may have (e.g., at least partially) an arc-shaped contour. Preferably, the at least one arc region may be adapted to curve at least partially around a lateral side of one of the cylindrical cells.

According to another aspect, the connecting portion may comprise a (e.g., elongated and/or strip-like) further negative arm section, preferably projecting (e.g., extending) away from a (or the) centre section of the connecting portion. The further negative arm section may, for example, have a curved and/or hook-shaped further negative arm section. Preferably, one (e.g., exactly one) of the negative contact portions may be (e.g., physically and/or electrically) connected (e.g., fixed) to the further negative arm section. Preferably, the one negative contact portion and the further negative arm section may be integrally formed as a unitary component, e.g. have a continuous material structure. Advantageously, by using the further negative arm section, the respective negative contact portion can be held securely in position.

According to a variant, the one negative contact portion may be connected to a distal end of the further negative arm section. Preferably, the one negative contact portion may be arranged at the far end of the further negative arm section and/or opposite to a proximal end of the further negative arm section, connected to the centre section.

In addition or alternatively, the one negative contact portion may project (e.g., extend) away from the further negative arm section. For example, the one negative contact portion may have a first negative contact portion end connected to the further negative arm section and an (e.g., opposite) free end.

In addition or alternatively, a width of the further negative arm section may vary along a length of the further negative arm section, e.g. decrease with increasing distance from the centre section. For example, the further negative arm section may become narrower with increasing distance from the centre section.

In addition or alternatively, the further negative arm section may comprise at least one arc region (e.g., circular arc region). For example, the region may (e.g., at least partially) be delimited by an arc and/or may have (e.g., at least partially) an arc-shaped contour. Preferably, the at least one arc region may be adapted to curve at least partially around a lateral side of one of the cylindrical cells.

According to an embodiment, the connecting portion may comprise a centre section, to which (e.g., exactly) two of the positive contact portions are (e.g., directly) connected. The connecting portion may further comprise a positive arm section, projecting (e.g., extending) away from the centre section. One of these (two) positive contact portions may be connected to a distal end of the positive arm section and (e.g., another) one of these (two) positive contact portions may be connected to a lateral side of the positive arm section. Preferably, the remaining two positive contact portions of the four positive contact portions may be (e.g., directly) connected to the centre section. The connecting portion may further comprise a negative arm section, projecting (e.g., extending) away from the centre section. One of the (four) negative contact portions may be connected to a distal end of the negative arm section, and two of the (four) negative contact portions may be connected to a lateral side of the negative arm section. The connecting portion may further comprise a further negative arm section, projecting (e.g., extending) away from the centre section. One, e.g. the remaining one, of the (four) negative contact portions may be connected to a distal end of the further negative arm section. Preferably, the negative arm section and the further negative arm section may form a ω-shaped structure. For example, the negative arm section and the further negative arm section may form a structure that resembles the Greek small (lowercase) letter omega (ω). In addition, the cell connector of this embodiment may have further features described herein, where compatible. For example, the negative arm section and/or the further negative arm section may (each) comprise an arc region, preferably forming part of the ω-shaped structure. Advantageously, this combination of features enables a particularly favourable connection for connecting cylindrical cells along a (straight) line. The respective cell connector may therefore also be referred to as "longitudinal cell connector".

According to another embodiment, the connecting portion may comprise a centre section. The connecting portion may further comprise a positive arm section, projecting (e.g., extending) away from the centre section. One of the (four) positive contact portions may be connected to a distal end of the positive arm section, and (e.g., another) one of the (four) positive contact portions may be connected to a (e.g., left) lateral side of the positive arm section. Two, e.g. the remaining two, of the (four) positive contact portions may be connected to another (e.g., right) lateral side of the positive arm section, preferably opposite to said lateral side. The connecting portion may further comprise a negative arm section, projecting away from the centre section. One of the (four) negative contact portions may be connected to a distal end of the negative arm section, and two of the (four) negative contact portions may be connected to a lateral side of the negative arm section. Preferably, the negative arm section may comprise two arc regions (e.g., circular arc regions), preferably forming a ω-shaped structure. For example, the two arc regions may be spaced apart from each other (e.g., along a length of the negative arm section) and/or may each be adapted to curve at least partially around a lateral side of one of the cylindrical cells. The connecting portion may further comprise a further negative arm section, projecting (e.g., extending) away from the centre section. One, e.g. the remaining one, of the (four) negative contact portions may be connected to a distal end of the further negative arm section. Preferably, the negative arm section and the further negative arm section may form a (or the) ω-shaped structure. In addition, the cell connector of this embodiment may have further features described herein, where compatible. For example, a width of the positive arm section, a width of the negative arm section, and/or a width of the further negative arm section may vary. Advantageously, this combination of features enables a particularly favourable connection for connecting cylindrical cells in a U-turn or cornered manner. The respective cell connector may therefore also be referred to as "right corner cell connector".

According to another embodiment, the connecting portion may comprise a centre section. The connecting portion may further comprise a positive arm section, projecting (e.g., extending) away from the centre section. One of the (four) positive contact portions may be connected to a distal end of the positive arm section, and (e.g., another) one of the (four) positive contact portions may be connected to a (e.g., left) lateral side of the positive arm section. Two, e.g. the remaining two, of the (four) positive contact portions may be connected to another (e.g., right) lateral side of the positive arm section, preferably opposite to said lateral side. Preferably, the positive arm section reverses its curvature along a length of the positive arm section. For example, the positive arm section may comprise a concave curved region and a convex curved region, directly adjoining the concave curved region. The connecting portion may further comprise a negative arm section, projecting (e.g., extending) away from the centre section. One of the (four) negative contact portions may be connected to a distal end of the negative arm section, and two of the (four) negative contact portions may be connected to a lateral side of the negative arm section. The connecting portion may further comprise a further negative arm section, projecting (e.g., extending) away from the centre section. One, e.g. the remaining one, of the (four) negative contact portions may be connected to a distal end of the further negative arm section. Preferably, the negative arm section and the further negative arm section may form a ω-shaped structure. In addition, the cell connector of this embodiment may have further features described herein, where compatible. For example, each positive contact portion may have a circularly widened free end and/or each negative contact portion may have a tapered free end. Advantageously, this combination of features enables a particularly favourable connection for connecting cylindrical cells in a further U-turn or cornered manner. The respective cell connector may therefore also be referred to as "left corner cell connector".

According to another general aspect of the disclosure, an electrical energy storage device is provided. Preferably, the electrical energy storage device may be an electrical energy storage device for a (e.g., electric) vehicle, for example, an (e.g., electric) utility vehicle.

The electrical energy storage device comprises a plurality of (e.g., cylindrical) cells (e.g., Lithium ion cells). Preferably, the cells of the plurality of cells are identical and/or oriented the same way, e.g. upright standing. Each of the (e.g., cylindrical) cells may comprise a positive terminal. For example, each of the positive terminals may be located at a top centre of one cell of the plurality of cells, e.g. marked by a small button or raised area. In addition or alternatively, each of the (e.g., cylindrical) cells may comprise a negative terminal. For example, a casing of each cell of the plurality of cells may serve as the respective negative terminal.

The electrical energy storage device further comprises a plurality of cell connectors, each configured as described herein. Consequently, the aspects described herein in connection with the cell connector are also to be disclosed and claimable in connection with the electrical energy storage device and vice versa. Each of the plurality of cell connectors physically and electrically (e.g., directly) connects eight (e.g., cylindrical) cells of the plurality of (e.g., cylindrical) cells to each other, preferably such that the positive contact portions of each cell connector each (e.g., electrically and/or directly) contact (e.g., is welded to) a positive terminal of one of the eight (e.g., cylindrical) cells and the negative contact portions of each cell connector each (e.g., electrically and/or directly) contact (e.g., is welded to) a negative terminal of one of the eight (e.g., cylindrical) cells. Advantageously, the cells of the plurality of (e.g., cylindrical) cells may comprise four-cell clusters are connected in parallel, and these clusters connected in series in a daisy chain structure.

According to an aspect, the plurality of cell connectors may comprise at least one longitudinal cell connector as described herein, at least one right corner cell connector as described herein, and/or at least one left corner cell connector as described herein.

According to another aspect, the plurality of (e.g., cylindrical) cells may be arranged parallel and/or may be oriented identically. For example, all positive and/or negative terminals of the plurality of (e.g., cylindrical) cells may be oriented in the same direction, e.g. to the top.

According to another aspect, the electrical energy storage device may comprise a (e.g., plastic) carrier plate (e.g., top plate), in which the plurality of cell connectors is integrated. For example, the carrier plate may have a plurality of recesses, whose contour is preferably adapted to the shape of the cell connectors, wherein each cell connector of the plurality of cell connectors may be arranged in one of the recesses of the plurality of recesses. In an embodiment, the plurality of cell connectors may be over-molded into the carrier plate. Advantageously, this can ensure a rigid assembly and improving positional accuracy during the welding of cell connectors to the terminals. That leads to significant reductions in assembly time, costs, and overall complexity. Furthermore, the over-molded cell connector design advantageously creates a flat surface, removing the need for a rib structures to hold the cell connectors. In addition, the touch protection plate design is advantageously simplified, and proper cell-to-cell isolation is achieved.

According to another aspect, the electrical energy storage device may comprise a battery management system for monitoring the plurality of (e.g., cylindrical) cells, e.g. their respective voltage, temperature, current, and/or charging state. The battery management system may comprise a plurality of (e.g., identical) sensors (e.g., each comprising an integrated circuit). Preferably, (e.g., only) one single sensor of the plurality of sensors may be placed on each of the plurality of cell connectors and/or may be configured to measure readings on eight (e.g., cylindrical) cells of the plurality of (e.g., cylindrical) cells at a time. Advantageously, the number of sensors can be reduced compared to a one-to-one linking of battery cells.

According to another aspect, the electrical energy storage device may comprise a (e.g., only one) positive end connector. Preferably, the positive end connector may (e.g., directly) contact exactly four positive terminals of the plurality of cylindrical cells and (e.g., directly) none of the negative terminals of the plurality of cylindrical cells.

According to another aspect, the electrical energy storage device may comprise a (e.g., only one) negative end connector. Preferably, the negative end connector may (e.g., directly) contact exactly four negative terminals of the plurality of cylindrical cells and (e.g., directly) none of the positive terminals of the plurality of cylindrical cells.

According to another general aspect of the disclosure, a (e.g., motor vehicle and/or electric vehicle) vehicle is provided. Preferably, the vehicle may be a commercial vehicle (e.g., electric commercial vehicle), such as a truck or a bus. For example, the vehicle may be specifically designed for transporting goods, for transporting people, and/or for towing one or more trailers. The vehicle comprises an electrical energy storage device and/or a cell connector as described herein. Consequently, the aspects described herein in connection with the energy storage device and the cell connector are also to be disclosed and claimable in connection with the vehicle and vice versa.

The aspects and features of the foregoing disclosure may be combined in any manner. Further details and advantages are described below with reference to the accompanying figures. The figures show:
- Figure 1: a top view of an electric energy storage device according to an embodiment;
- Figure 2A to 2C: different views of a cell connector according to a first embodiment;
- Figure 3A to 3D: different detailed views of the cell connector shown in Figures 2A to 2C;
- Figure 4A to 4C: different views of a cell connector according to a second embodiment;
- Figure 5A to 5C: different views of a cell connector according to a third embodiment;
- Figure 6A: a circuit diagram of an electric energy storage device according to an embodiment;
- Figure 6B: a positive end connector according to an embodiment; and
- Figure 6C: a negative end connector according to an embodiment.

The embodiments shown in the figures correspond at least in part, so that similar or identical parts are provided with the same reference signs, and reference is also made to the description of the other embodiments or figures for their explanation in order to avoid repetitions. Furthermore, for reasons of clarity, not all (identical) components appearing more than once have always been referenced separately.

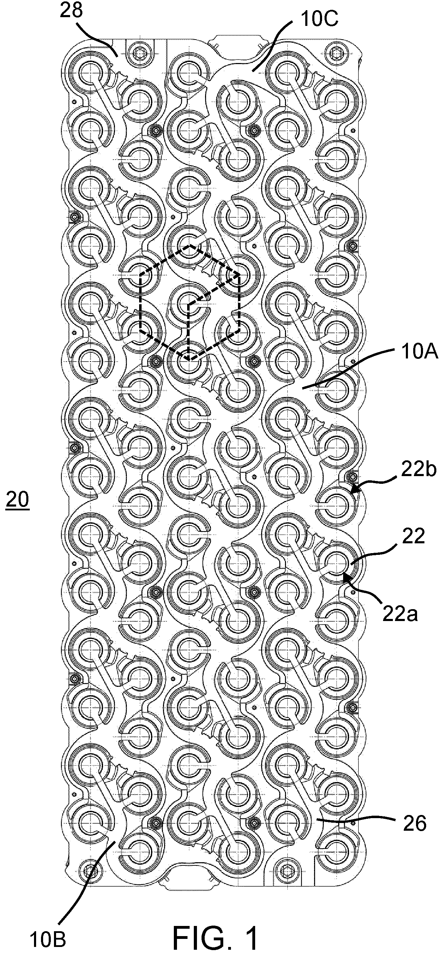

Figure 1 shows (partially) an electric energy storage device 20 according to an embodiment of the disclosure. The electric energy storage device 20 may be installed in a vehicle (not shown), e.g. forming part of a battery pack of the vehicle.

The electric energy storage device 20 may provide electric energy to at least one electric drive unit of the vehicle for driving the vehicle. For example, the vehicle may be driven by a central electric drive, several electric wheel hub drives, or several electric drives near the wheels. The electric energy storage device 20 may be designed as a high-voltage electric energy storage device. The high-voltage electric energy storage device may be operated or can be operated with a DC voltage between 60 V and 1.5 kV, particularly preferred between 400 V and 850 V, for example. The electric energy storage device 20 may be externally charged via an electric charging cable connected to a charging socket of the vehicle.

The electric energy storage device 20 comprises a plurality of cylindrical cells 22 and a plurality of cell connectors 10A, 10B, 10C. For example, as shown in Figure 1, the electric energy storage device 20 may comprise eighty-four cylindrical cells 22 and twenty cell connectors 10A, 10B, 10C.

The cylindrical cells 22 (of the plurality of cylindrical cells 22) may be cylindrical Lithium ion cells. Each cylindrical cell 22 may comprise an active material (e.g., cathode, anode, and separator wound into a spiral often referred to as a "jelly roll") housed in a (e.g., cylindrical) casing, e.g. made of nickel-plated steel or aluminium.

Each cylindrical cell 22 may comprise a positive terminal 22a and a negative terminal 22b. For example, each of the positive terminals 22a may be located at a top surface of the respective cylindrical cell 22 and/or marked by a small button or (e.g., circular) raised area. Preferably, each negative terminal 22b may be located at a (lateral) side surface of the respective cylindrical cell 22. For example, the casing of each cylindrical cell 22 may serve as the respective negative terminal. Generally, each negative terminal 22b may also be located at the top surface, e.g. surrounding the respective positive terminals 22a in the form of a ring.

The cylindrical cells 22 (of the plurality of cylindrical cells 22) may be arranged in parallel and/or are oriented identically. For example, all positive terminals 22a of the cylindrical cells 22 may be oriented in the same direction, preferably upwards. Further, the cylindrical cells 22 may be arranged in a (e.g., quasi-)hexagonal grid (see dashed marking in Figure 1) and/or dense packing. For example, the cylindrical cells 22 may be arranged in five rows, each comprising fourteen cylindrical cells 22 with constant cell spacing, the rows being shifted against each other by half a cell spacing.

The cell connectors 10A, 10B, 10C (of the plurality of cell connectors 10A, 10B, 10C) may be metallic and/or made of an electrically conductive and preferably weldable material. Each cell connector 10A, 10B, 10C may be a single piece and/or not composed of several individual parts. For example, each cell connector 10A, 10B, 10C may be punched, milled, laser-cut and/or water jet-cut (as a single piece) from a flat material, e.g. a metal sheet. Thus, each cell connector 10A, 10B, 10C may be integrally formed as a unitary component, i.e. it not does not comprise several individual components welded together.

As shown in Figure 1, each of the plurality of cell connectors 10A, 10B, 10C physically and electrically connects eight cylindrical cells 22 of the plurality of cylindrical cells 22 to each other. Preferably, exactly four positive terminals 22a of four (different) cylindrical cells 22 and exactly four negative terminals 22b of four (different) cylindrical cells 22 may be physically and electrically connected to each other via each cell connector 10A, 10B, 10C. In this context, each cell connectors 10A, 10B, 10C may be welded to the exactly four positive terminals 22a of four (different) cylindrical cells 22 and exactly four negative terminals 22b of four (different) cylindrical cells 22.

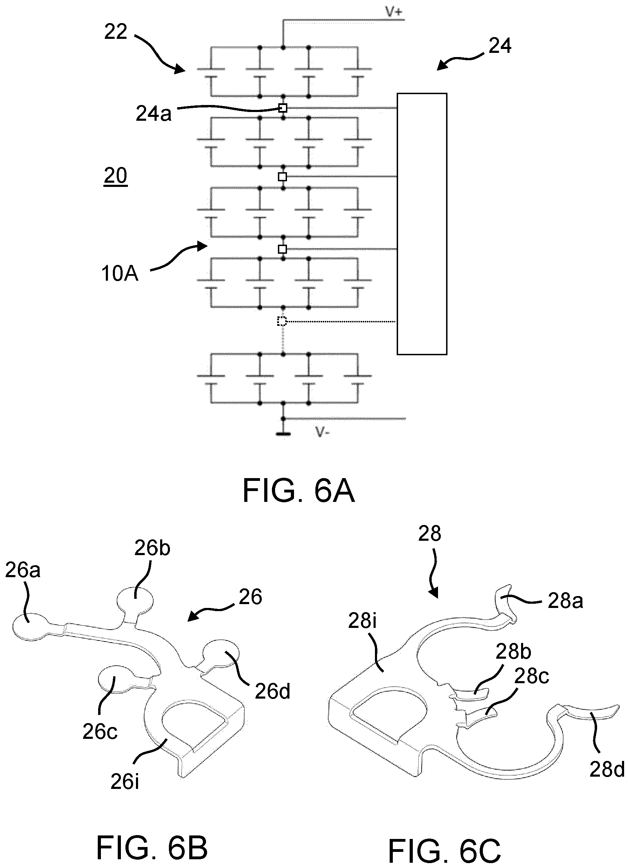

By repeating this type of connection in a daisy chain manner, the plurality of cylindrical cells 22 may be connected in a series-parallel connection, whose equivalent circuit diagram is shown in Figure 6A. For example, the plurality of cylindrical cells may be connected via the plurality of cell connectors 10A, 10B, 10C in a 21S4P configuration, i.e. the plurality of cylindrical cells comprises twenty-one (four-cell) clusters, each comprising four cylindrical cells 22 connected in parallel, wherein the twenty-one (four-cell) clusters are connected in series to each other.

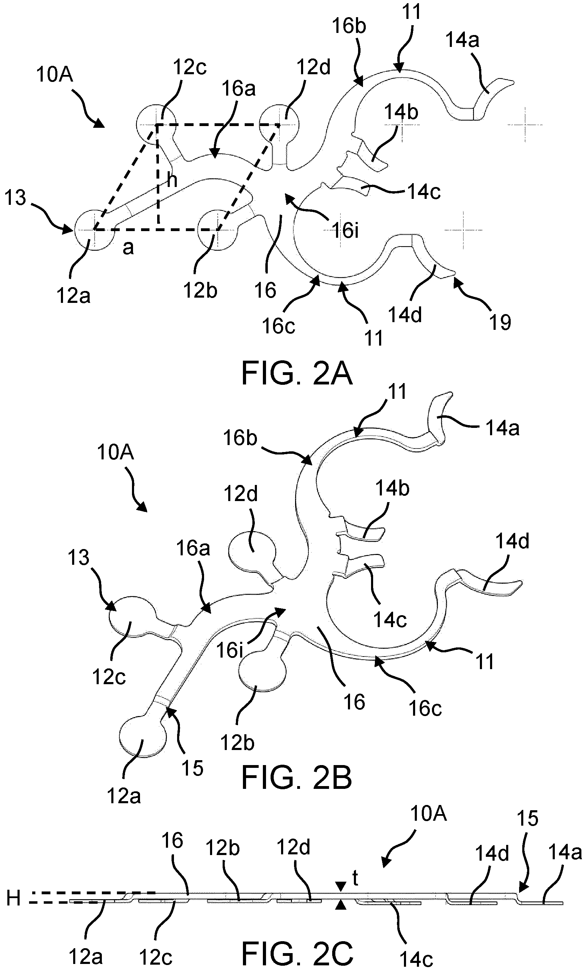

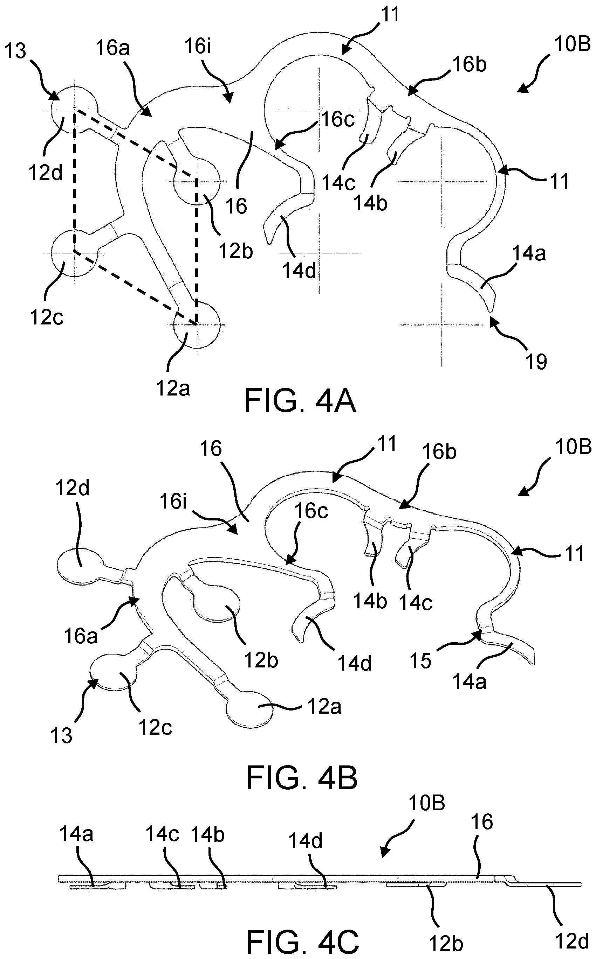

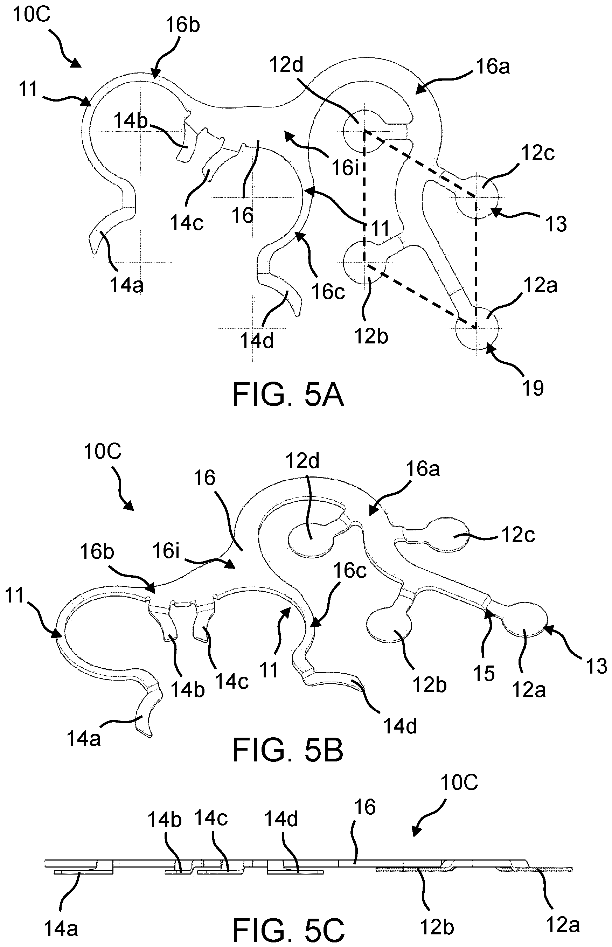

Generally, the cell connectors 10A, 10B, 10C (of the plurality of cell connectors 10A, 10B, 10C) may be identical. However, preferably, the plurality of cell connectors 10A, 10B, 10C comprises different types of cell connectors 10A, 10B, 10C, as exemplarily shown in Figure 1. For example, the plurality of cell connectors 10A, 10B, 10C may comprise several, e.g. eighteen, longitudinal cell connectors 10A (shown in detail in Figures 2A to 3D), one right corner cell connector 10B (shown in detail in Figures 4A to 4C), and one left corner cell connector 10C (shown in detail in Figures 5A to 5C). The longitudinal cell connectors 10A, right corner cell connector 10B, and left corner cell connector 10C may essentially have the same basic structure or design but may (slightly) differ in the details of their geometry. Before discussing the differences between the respective connector types, the general features that they all have in common will be discussed in the following. To simplify the description, reference is only made to one cell connector 10A, 10B, 10C, whereby the features described in general apply to all cell connectors 10A, 10B, 10C of the plurality of cell connectors 10A, 10B, 10C.

As shown in Figures 2A to 5C, the cell connector 10A, 10B, 10C comprises exactly four positive contact portions, labelled as 12a, 12b, 12c, 12d, and exactly four negative contact portions, labelled as 14a, 14b, 14c, 14d, and a connecting portion 16, via which the four positive contact portions 12a, 12b, 12c, 12d and the four negative contact portions 14a, 14b, 14c, 14d are physically and electrically connected to each other.

Preferably, each of the positive contact portions 12a, 12b, 12c, 12d may (e.g., directly) contact one positive terminal 22a of one cylindrical cell 22 of the plurality of cylindrical cells 22. For example, each positive contact portion 12a, 12b, 12c, 12d may be welded to the respective positive terminal 22a. Similarly, each of the negative contact portions 14a, 14b, 14c, 14d may (e.g., directly) contact one negative terminal 22b of one cylindrical cell 22 of the plurality of cylindrical cells 22. For example, each negative contact portion 14a, 14b, 14c, 14d may be welded to the respective negative terminal 22b.

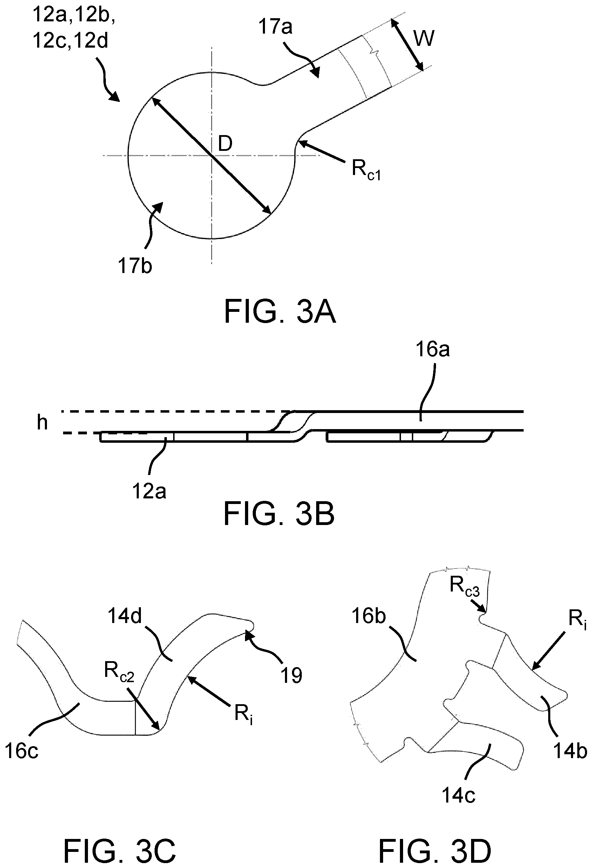

The positive contact portions 12a, 12b, 12c, 12d and the negative contact portions 14a, 14b, 14c, 14d of the cell connector 10A, 10B, 10C may project away from the connecting portion 16, e.g. substantially perpendicular. For example, each positive contact portion 12a, 12b, 12c, 12d and each negative contact portion 14a, 14b, 14c, 14d may be connected to the connecting portion 16 at only one side of the respective positive/negative contact portion 12a, 12b, 12c, 12d, 14a, 14b, 14c, 14d, see, for example, Figures 3B, 4B, and 5B.

The positive contact portions 12a, 12b, 12c, 12d and the negative contact portions 14a, 14b, 14c, 14d may be essentially flat or plane. For example, the positive contact portions 12a, 12b, 12c, 12d and the negative contact portions 14a, 14b, 14c, 14d may all have a material thickness of less than 2 mm, preferably less than 1.5 mm, and/or may be arranged at essentially the same height and/or within a single plane, see, for example, Figures 3C, 4C, and 5C. However, the positive contact portions 12a, 12b, 12c, 12d and the negative contact portions 14a, 14b, 14c, 14d may differ in shape.

For example, each positive contact portion 12a, 12b, 12c, 12d may comprise a circularly widened free end 13. Preferably, the circularly widened free end 13 may have a diameter D between 15 mm and 17 mm, see Figure 3A. Thus, each positive contact portion 12a, 12b, 12c, 12d may widen with increasing distance from the connecting portion 16. In detail, each positive contact portion 12a, 12b, 12c, 12d may comprise a straight strip section 17a and a circular section 17b, see Figure 3A. The straight strip section 17a and a circular section 17b may, e.g. smoothly, merge into each other. For example, the junction between the straight strip section 17a and a circular section 17b may comprise a corner radius R_{c1} between 1 mm and 8 mm, preferably between 4 mm and 8 mm, see Figure 3A. The corner radius R_{c1} may be a distance from a centre of the corner to the outermost point on the corner. The circular section 17b may be connected to the connecting portion 16 via the strip section 17a.

Further, the positive contact portions 12a, 12b, 12c, 12d may be arranged in a two-dimensional (e.g., quasi-)hexagonal grid, corresponding to the grid of the cylindrical cells 22, see e.g. Figures 2A, 4A, and 5A. For example, the positive contact portions 12a, 12b, 12c, 12d may be arranged in a parallelogram having sides of essentially equal length a, wherein the angles between the sides a are essentially 120° or 60° respectively. The length a, corresponding to the cell to cell distance in x-direction may range between 47 mm to 48 mm, for example. The cell to cell distance in y-direction, corresponding to height h of the parallelogram, may range between 40 mm and 41 mm, for example.

Preferably, all positive contact portions 12a, 12b, 12c, 12d of the cell connector 10A, 10B, 10C are identically formed, i.e. have the same geometry, shape, and/or dimensions.

Each negative contact portion 14a, 14b, 14c, 14d of the cell connector 10A, 10B, 10C may, for example, have a strip-like, cantilever-like and/or tongue-like shape. In contrast to the positive contact portions 12a, 12b, 12c, 12d, the negative contact portions 14a, 14b, 14c, 14d may preferably not widen with increasing distance from the connecting portion 16. Each negative contact portion 14a, 14b, 14c, 14d may rather have a tapered free end 19, see Figure 2A, 4A, and 5A.

Each negative contact portion 14a, 14b, 14c, 14d may be curved. As shown in Figures 3C and 3D, for example, each negative contact portion 14a, 14b, 14c, 14d may have an inner radius of curvature Rᵢ between 15 mm and 17 mm. The inner radius of curvature Rᵢ may be a distance from a centre of the curvature to the innermost point on the curve. The inner radius of curvature Rᵢ may be adopted to the (outer) contour of the cylindrical cells 22 and/or correspond to the radius of the casing of the cylindrical cells 22. Each negative contact portion 14a, 14b, 14c, 14d may be (e.g., directly) connected (e.g., welded) to a side surface of one of the cylindrical cells 22. In addition or alternatively, each negative contact portion 14a, 14b, 14c, 14d may have a corner radius R_{c2} between 1 and 8 mm, preferably 4 mm and 8 mm.

As shown in Figures 2A, 2B, 4A, 4B, 5A, and 5B, two of the negative contacting portions, namely contacting portions 14a and 14d, may be longer than the other two negative contacting portions, namely contacting portions 14b and 14c. Further, a direction of curvature of the curved negative contact portion 14a, 14b, 14c, 14d may differ. For example, some of the negative contacting portions may be curved and/or bent in a first (e.g., right) direction, while the remaining negative contacting portions may be curved and/or bent in a second (e.g., left) direction, different from the first direction. As shown in Figures 2A, 2B, 4A, 4B, 5A, and 5B, for example, the negative contact portions 14a and 14c may be curved and/or bent in a first (e.g., right) direction, while the negative contact portions 14b and 14d may be curved and/or bent in a second (e.g., left) direction, different from and/or opposite to the first direction.

Preferably, each positive contact portion 12a, 12b, 12c, 12d and each negative contact portions 14a, 14b, 14c, 14d may be integrally connected to the connecting portion 16. For example, the positive contact portions 12a, 12b, 12c, 12d, the negative contact portion 14a, 14b, 14c, 14d and the connecting portion 16 may be a single piece with a homogeneous material structure. However, generally, it is also possible that the positive contact portions 12a, 12b, 12c, 12d and negative contact portions 14a, 14b, 14c, 14d are fixed to the connecting portion 16, e.g. via a welded and/or force-fit connection.

As shown in Figures 2B, 2C, 4B, 4C, 5B, and 5C, each positive contact portion 12a, 12b, 12c, 12d and each negative contact portion 14a, 14b, 14c, 14d may be connected to the connecting portion 16 via a step portion 15 of the cell connector 10A, 10B, 10C, see also the detailed view in Figure 3B. Consequently, the positive contact portions 12a, 12b, 12c, 12d and the negative contact portions 14a, 14b, 14c, 14d may be arranged offset in height to the connecting portion 16, see Figures 2C, 4C, and 5C. For example, the connecting portion 16 may essentially be arranged within a first plane, while the positive contact portions 12a, 12b, 12c, 12d and the negative contact portions 14a, 14b, 14c, 14d may essentially be arranged in a second plane arranged offset to the first plane. Preferably, each of the step portions 15 may have a step height h between 2 mm and 4 mm, see Figure 3B. Taking into account the preferred material thickness of the cell connector 10A, 10B, 10C between 1 mm and 2 mm, the cell connector 10A, 10B, 10C may have a total height H of less than 8 mm, see Figure 2C. Preferably, the cell connector 10A, 10B, 10C may have its smallest extension in height direction.

As mentioned before, the connecting portion 16 connects all positive contact portions 12a, 12b, 12c, 12d and all negative contact portions 14a, 14b, 14c, 14d. The connecting portion 16 may generally have a shape of a, e.g. flat or essentially two-dimensional, three-armed star.

In detail, the connecting portion 16 may comprise a (common) centre section 16i, a positive arm section 16a projecting away from the connecting portion 16, a negative arm section 16b projecting away from the centre section 16i, and a further negative arm section 16c projecting away from the centre section 16i, see, for example, Figures 2A, 4A, and 5A.

The centre section 16i may be arranged in the area of the centre of mass of the cell connector 10A, 10B, 10C and/or may form the centre of the structure of the cell connector 10A, 10B, 10C.

The positive arm section 16a, the negative arm section 16b, and/or the further negative arm section 16c may (each) have a strip-like, cantilever-like and/or tongue-like shape. The positive arm section 16a, the negative arm section 16b, and/or the further negative arm section 16c may (each) be curved and/or hook-shaped. The positive arm section 16a, the negative arm section 16b, and/or the further negative arm section 16c may (each) have a meandering and/or winding shape.

The positive arm section 16a may be (e.g., directly) connected to all or only some of the positive contact portions 12a, 12b, 12c, 12d. Each of the respective positive contact portions 12a, 12b, 12c, 12d may project away from the positive arm section 16a, e.g. inclined or essentially perpendicular.

The negative arm section 16b may be (e.g., directly) connected to some, e.g. three, of the negative contact portions 14a, 14b, 14c, 14d, while the further negative arm section 16c may be (e.g., directly) connected to the remaining, e.g. one, of the negative contact portions 14a, 14b, 14c, 14d. Each of the respective negative contact portions 14a, 14b, 14c, 14d may project away from the negative arm section 16b or further negative arm section 16c, e.g. inclined or essentially perpendicular.

The positive arm section 16a, the negative arm section 16b, and/or the further negative arm section 16c may (each) be configured to accumulate current from the respective positive/negative contact portions 12a, 12b, 12c, 12d, 14a, 14b, 14c, 14d connected to it. The positive arm section 16a, the negative arm section 16b, and/or the further negative arm section 16c may (each) have a width W that varies along a length of the positive arm section 16a, negative arm section 16b, and/or further negative arm section 16c. For example, the width W may decrease with increasing distance from the centre section 16i, see, for example, Figures 2A, 4A, and 5A.The width W may be a (horizontal) measurement taken at right angles to the length of the object. In addition or alternatively, the W may be adapted to the current flow, e.g. increase in regions of higher current flow.

The cell connector 10A shown in Figures 2A to 3D, which may be referred to as longitudinal cell connector 10A and will be discussed in the following, is characterized in that only two of the positive contact portions, namely positive contact portions 12a and 12c, are (e.g., directly) connected to the positive arm section 16a, while the remaining positive contact portions, namely positive contact portions 12b and 12d, are (e.g., directly) connected to the centre section 16i. The positive arm section 16a may be arranged (at least partially) between the positive contact portions 12b and 12d and/or may extend away from the centre section 16i such that the positive arm section 16a is arranged essentially on the bisector of the angle spanned by the positive contact portions 12b and 12d.

One of the two positive contact portions, namely positive contact portion 12a, is connected to a distal end of the positive arm section 16a and the other one of the two positive contact portions, namely positive contact portion 12c, is connected to a lateral side of the positive arm section 16a. The positive contact portion 12a may thereby be in alignment with the positive arm section 16a, while the positive contact portion 12c may be arranged essentially perpendicular to the positive arm section 16a.

The width W of the positive arm section 16a between the centre section 16i and the positive contact portion 12c may be wider, e.g. twice as wide, as the width W of the positive arm section 16a between the positive contact portion 12c and the positive contact portion 12c. For example, the positive arm section 16a may thus comprise a curved first region arranged between the centre section 16i and the positive contact portion 12d and a straight second region arranged between the positive contact portion 12d and the positive contact portion 12a, wherein preferably the first region is at least twice as wide as the second region.

Further, three of the negative contact portions, namely negative contact portions 14a, 14b, and 14c, are connected to the negative arm section 16b of the cell connector 10A, while the remaining negative contact portion, namely negative contact portion 14d, is connected to the further negative arm section 16c. In detail, the negative contact portion 14a may be connected to a distal end of the negative arm section 16b.

The negative contact portions 14b and 14c may be connected to a lateral side of the negative arm section 16b. Preferably, the negative contact portions 14b and 14c may be arranged quasi-parallel and/or next to each other. In the (connection) region of the transition from the negative arm section 16b to the contact portion 14b and/or negative contact portion 14c, the negative arm section 16b may comprise indentations, see Figure 3D. An edge of the negative arm section 16b may merge into the indentation via a radius Rc₃, preferably between 0.5 mm and 4 mm. The negative arm section 16b may reverse its curvature at least one time, preferably twice, along a length of the negative arm section 16b, preferably in a region between the negative contact portion 14b and negative contact portion 14a. The negative contact portion 14d may be connected to a distal end of the further negative arm section 16c.

Further, the negative arm section 16b and the further negative arm section 16c may form a ω-shaped structure. For this, the negative arm section 16b and the further negative arm section 16c may each comprise a circular arc region 11, preferably adapted to curve at least partially around a lateral side of one of the cylindrical cells 22. For example, the circular arc region 11 of the negative arm section 16b may curve around the cylindrical cells 22 contacted by negative contact portions 14b, while the circular arc region 11 of the further negative arm section 16c may curve around the cylindrical cells 22 contacted by negative contact portions 14c. In the case of the negative arm section 16b the circular arc region 11 may be arranged between the negative contact portion 14b and the negative contact portion 14a, while in the case of the further negative arm section 16c the circular arc region 11 may be arranged between the negative contact portion 14d and the centre section 16i.

The cell connector 10B shown in Figures 4A to 4C, which may be referred to as right corner cell connector 10B and will be discussed in the following, is characterized in that all four positive contact portions 12a, 12b, 12c, 12d are (e.g., directly) connected to the positive arm section 16a. In detail, the positive contact portion 12a may be connected to a distal end of the positive arm section 16a. The positive contact portion 12b may be connected to a (e.g., left) lateral side of the positive arm section 16a. The positive contact portions 12c and 12d may be connected to another (e.g., right) lateral side of the positive arm section 16a opposite to said lateral side.

Preferably, the positive contact portion 12d may be arranged between the positive contact portions 12b and 12c along the length of the positive arm section 16a. In addition or alternatively, the positive contact portion 12c may be arranged between the positive contact portions 12d and 12a along the length of the positive arm section 16a. The positive contact portion 12a may be in alignment with the positive arm section 16a, while the positive contact portions 12b, 12c, and 12d may be arranged inclined and/or essentially perpendicular to the positive arm section 16a.

The width W of the positive arm section 16a may decrease with increasing distance from the centre section 16i. For example, the width W of the positive arm section 16a between the centre section 16i and the positive contact portion 12d may be wider than the width W of the positive arm section 16a between the positive contact portion 12d and the positive contact portion 12c. Similarly, the width W of the positive arm section 16a between the positive contact portion 12d and the positive contact portion 12c may be wider than the width W of the positive arm section 16a between the positive contact portion 12c and the positive contact portion 12a.

Further, the positive arm section 16a may comprise a curved first region arranged between the centre section 16i and the positive contact portion 12c and a straight second region arranged between the positive contact portion 12c and the positive contact portion 12a, wherein preferably the first region is at least twice as wide as the second region. In addition or alternatively, the positive arm section 16a may be curved only in one direction, e.g. be curved towards the left.

In addition, three of the negative contact portions, namely negative contact portions 14a, 14b, and 14c, may be connected to the negative arm section 16b of the cell connector 10B, while the remaining negative contact portion, namely negative contact portion 14d, may be connected to the further negative arm section 16c. In detail, the negative contact portion 14a may be connected to a distal end of the negative arm section 16b. The negative contact portions 14b and 14c may be connected to a lateral side of the negative arm section 16b.

Preferably, the negative contact portions 14b and 14c may be arranged quasi-parallel and/or next to each other. In the (connection) region of the transition from the negative arm section 16b to the contact portion 14b and/or negative contact portion 14c, the negative arm section 16b may comprise indentations. The negative arm section 16b may reverse its curvature at least one time, preferably twice, along a length of the negative arm section 16b, preferably in a region between the negative contact portion 14c and negative contact portion 14a. The negative contact portion 14d may be connected to a distal end of the further negative arm section 16c.

Further, the negative arm section 16b and the further negative arm section 16c may form a ω-shaped structure. For this, the negative arm section 16b may comprise two circular arc regions 11. Preferably, the two circular arc regions 11 may be spaced apart along the length of the negative arm section 16b. For example, one of the two circular arc regions 11 of the negative arm section 16b may be arranged between the centre section 16i and the negative contact portion 14c, while the other circular arc region 11 may be arranged between the negative contact portion 14b and the negative contact portions 14a.

Preferably, each of the circular arc regions 11 is adapted to curve at least partially around a lateral side of one of the cylindrical cells 22. For example, one of the two circular arc regions 11 may curve around the cylindrical cell 22 contacted by negative contact portions 14c, while the other circular arc region 11 may curve around the cylindrical cell 22 contacted by negative contact portion 14b. The further negative arm section 16c may also have a circular curved edge and/or a shape that extends one of the circular arc regions 11 to form one of the ω-arms.

The cell connector 10C shown in Figures 5A to 5C, which may be referred to as left corner cell connector 10C and will be discussed in the following, is characterized in that all four positive contact portions 12a, 12b, 12c, 12d are (e.g., directly) connected to the positive arm section 16a. In detail, the positive contact portion 12a may be connected to a distal end of the positive arm section 16a. The positive contact portion 12c may be connected to a (e.g., left) lateral side of the positive arm section 16a. The positive contact portions 12b and 12d may be connected to another (e.g., right) lateral side of the positive arm section 16a opposite to said lateral side.

Preferably, the positive contact portion 12c may be arranged between the positive contact portions 12b and 12d along the length of the positive arm section 16a. In addition or alternatively, the positive contact portion 12b may be arranged between the positive contact portions 12c and 12a along the length of the positive arm section 16a. The positive contact portion 12a may be in alignment with the positive arm section 16a, while the positive contact portions 12b, 12c, and 12d may be arranged inclined and/or essentially perpendicular to the positive arm section 16a.

The width W of the positive arm section 16a may decrease with increasing distance from the centre section 16i. For example, the width W of the positive arm section 16a between the centre section 16i and the positive contact portion 12d may be wider than the width W of the positive arm section 16a between the positive contact portion 12d and the positive contact portion 12a. For example, the positive arm section 16a may comprise a curved first region arranged between the centre section 16i and the positive contact portion 12b and a straight second region arranged between the positive contact portion 12b and the positive contact portion 12a, wherein preferably the first region is at least twice as wide as the second region. Preferably, the curved first region is an S-curved first region and/or the positive arm section 16a reverses its curvature along a length of the positive arm section 16a, e.g. between the positive contact portion 12c and positive contact portion 12b.

In addition, three of the negative contact portions, namely negative contact portions 14a, 14b, and 14c, may be connected to the negative arm section 16b of the cell connector 10C, while the remaining negative contact portion, namely negative contact portion 14d, may be connected to the further negative arm section 16c. In detail, the negative contact portion 14a may be connected to a distal end of the negative arm section 16b. The negative contact portions 14b and 14c may be connected to a lateral side of the negative arm section 16b.

Preferably, the negative contact portions 14b and 14c may be arranged quasi-parallel and/or next to each other. In the (connection) region of the transition from the negative arm section 16b to the contact portion 14b and/or negative contact portion 14c, the negative arm section 16b may comprise indentations. The negative arm section 16b may reverse its curvature at least one time, preferably twice, along a length of the negative arm section 16b, preferably in a region between the negative contact portion 14c and negative contact portion 14a. The negative contact portion 14d may be connected to a distal end of the further negative arm section 16c.

Further, the negative arm section 16b and the further negative arm section 16c may form a ω-shaped structure. For this, the negative arm section 16b and the further negative arm section 16c may each comprise a circular arc region 11, preferably adapted to curve at least partially around a lateral side of one of the cylindrical cells 22. For example, the circular arc region 11 of the negative arm section 16b may curve around the cylindrical cells 22 contacted by negative contact portions 14b, while the circular arc region 11 of the further negative arm section 16c may curve around the cylindrical cells 22 contacted by negative contact portions 14c. In the case of the negative arm section 16b the circular arc region 11 may be arranged between the negative contact portion 14b and negative contact portion 14a, while in the case of the further negative arm section 16c the circular arc region 11 may be arranged between the negative contact portion 14d and the centre section 16i.

Independent of the specific embodiment, the width in the entire design may range between 2.5 mm to 13 mm. In addition or alternatively, the corner radii may range between 0.5 mm and 8 mm throughout the cell connector 10A, 10B, 10C geometry. In addition or alternatively, the overall profile curvature radius for the cell connector 10A, 10B, 10C geometry may range between 15 mm and 35 mm. In addition or alternatively, the cell connector 10A, 10B, 10C may have a variable thickness, e.g. a lower thickness at welding connections with the cylindrical cells 22.

The electric energy storage device 20 may optionally further comprise a carrier plate (not shown), in which the plurality of cell connectors 10A, 10B, 10C may be accommodated and/or integrated. The carrier plate may be made of plastic and/or an electrical insulating material. The carrier plate may have a plurality of recesses, whose contour may be adapted to the shape of the cell connectors 10A, 10B, 10C, wherein each cell connector 10A, 10B, 10C of the plurality of cell connectors 10A, 10B, 10C may be arranged in one of the recesses of the plurality of recesses. The plurality of cell connectors 10A, 10B, 10C may be over-molded into the carrier plate. This ensures precise positioning of the cell connectors 10A, 10B, 10C over the cell top, optimizing laser-welded connections and enhancing positional tolerances accuracy. That leads to significant reductions in assembly time, costs, and overall complexity.

The electric energy storage device 20 may optionally further comprise a battery management system 24 for monitoring the plurality of cylindrical cells 22, see Figure 6A. The battery management system 24 may comprise a plurality of sensors 24a. Each sensor 24a of the plurality of sensors 24a may be associated to and/or arranged on one of the cell connectors 10A, 10B, 10C, allowing the (simultaneous) monitoring of eight cylindrical cells 22. The battery management system 20 and/or its electronics may be integrated into the carrier plate.

The electric energy storage device 20 may further comprise a positive end connector 26 and a negative end connector 28, see Figures 6B and 6C. These end connectors 26 and 28 may be used to connect external components to the electric energy storage device 20. For example, the positive end connector 26 and the negative end connector 28 may serve as a common positive and negative pole of electric energy storage device 20.

The positive end connector 26 may contact exactly four positive terminals 22a of the plurality of cylindrical cells 22 and none of the negative terminals 22b of the plurality of cylindrical cells 22, see Figure 1. For this, the positive end connector 26 may comprise exactly four (e.g. circular) positive end contact portions 26a, 26b, 26c, 26d, see Figure 6B. Each of the positive end contact portions 26a, 26b, 26c, 26d may contact a positive terminal 22a of one of the cylindrical cells 22. For example, the positive end contact portions 26a, 26b, 26c, 26d may each be welded to a respective positive terminal 22a.

The positive end connector 26 may comprise a main body 26i, from which the positive end contact portions 26a, 26b, 26c, 26d may project away. The main body 26i of the positive end connector 26 may comprise a hole and/or an angled (or bent) side edge, preferably at 90°. In addition or alternatively, the main body 26i of positive end connector 26 may comprise an arm, to which at least two of the four positive end contact portions 26a, 26b, 26c, 26d are directly connected to, preferably via step. Preferably, a width of the arm varies along a length of the arm, e.g. decrease with increasing distance from the hole and/or the angled side edge.

The negative end connector 28 may contact exactly four negative terminals 22b of the plurality of cylindrical cells 22 and none of the positive terminals 22a of the plurality of cylindrical cells 22, see Figure 1. For this, the negative end connector 28 may comprise exactly four (e.g. strip-like and/or cantilever-like) negative end contact portions 28a, 28b, 28c, 28d, see Figure 6C. Each of the negative end contact portions 28a, 28b, 28c, 28d may contact a negative terminal 22b of one of the cylindrical cells 22. For example, the negative end contact portions 28a, 28b, 28c, 28d may each be welded to a respective negative terminal 22b.

The negative end connector 28 may comprise a main body 28i, from which the negative end contact portions 28a, 28b, 28c, 28d may project away. The main body 26i of the negative end connector 28 may comprise a hole and/or an angled (or bent) side edge, preferably at 90°. In addition or alternatively, the main body 28i of negative end connector 26 may comprise two arms, each having a negative end contact portion 28a, 28d connected to its distal end.

Although the invention has been described with reference to specific embodiments, it is apparent to one skilled in the art that various modifications may be made and equivalents may be used as substitutes without departing from the scope of the invention. Consequently, the invention is not intended to be limited to the disclosed embodiments, but is intended to encompass all embodiments falling within the scope of the appended claims. In particular, the invention also claims protection for the subject-matter and features of the dependent claims independently of the referenced claims.

### Reference list

- 10A: longitudinal cell connector
- 10B: right corner cell connector
- 10C: left corner cell connector
- 11: arc region
- 12a, 12b, 12c, 12d: positive contact portion
- 13: free end
- 14a, 14b, 14c, 14d: negative contact portion
- 15: step portion
- 16: connecting portion
- 16a: positive arm section
- 16b: negative arm section
- 16c: further negative arm section
- 16i: centre section
- 17a: strip section
- 17b: circular section
- 19: tapered free end
- 20: energy storage device
- 22: cylindrical cell
- 22a: positive terminal
- 22b: negative terminal
- 26: positive end connector
- 26a, 26b, 26c, 26d: positive end contact portion
- 26i: main body of the positive end connector
- 28: negative end connector
- 28a, 28b, 28c, 28d: negative end contact portion
- 28i: main body of the negative end connector

## Claims

1. A cell connector (10A, 10B, 10C) for electrically connecting eight cylindrical cells (22) for an electrical energy storage device, the cell connector (10A, 10B, 10C) comprising:
exactly four, preferably flat, positive contact portions (12a, 12b, 12c, 12d), each configured to electrically contact a positive terminal (22a) of one of the eight cylindrical cells (22);
exactly four, preferably flat, negative contact portions (14a, 14b, 14c, 14d), each configured to electrically contact a negative terminal (22b) of one of the eight cylindrical cells (22); and
a, preferably flat, connecting portion (16), via which the four positive contact portions (12a, 12b, 12c, 12d) and the four negative contact portions (14a, 14b, 14c, 14d) are physically and electrically connected to each other.

2. The cell connector (10A, 10B, 10C) according to claim 1, wherein:
the positive contact portions (12a, 12b, 12c, 12d) and the negative contact portions (14a, 14b, 14c, 14d) are formed differently, preferably having a different shape; and/or
the positive contact portions (12a, 12b, 12c, 12d) are identically formed and/or each comprise a circularly widened free end (13), wherein preferably the circularly widened free end (13) has a diameter (D) between 15 mm and 17 mm; and/or
the negative contacting portions (14a, 14b, 14c, 14d) each have a, preferably curved, strip-like, cantilever-like, and/or tongue-like shape, wherein preferably two of the negative contacting portions (14a, 14d) are longer than the other two negative contacting portions (14b, 14c).

3. The cell connector (10A, 10B, 10C) according to claim 1 or 2, wherein:
the cell connector (10A, 10B, 10C) is made of sheet metal and/or has a material thickness (t) of less than 3 mm, preferably between 1 mm and 2 mm; and/or
the cell connector (10A, 10B, 10C) is essentially flat and/or has a height (H) less than 8 mm; and/or
the cell connector (10A, 10B, 10C) is integrally formed as a unitary component; and/or
the cell connector (10A, 10B, 10C) is punched, milled, laser-cut, and/or water jet-cut from a flat material.

4. The cell connector (10A, 10B, 10C) according to one of the preceding claims, wherein:
the positive contact portions (12a, 12b, 12c, 12d) and/or the negative contacting portions (14a, 14b, 14c, 14d) are each connected to the connecting portion (16) via a step portion (15) of the cell connector (10A, 10B, 10C), preferably having a step height (h) between 2 mm and 4 mm; and/or
the positive contacting portions (12a, 12b, 12c, 12d) are arranged offset in height to the connecting portion (16), wherein preferably all the positive contacting portions (12a, 12b, 12c, 12d) are arranged at the same height; and/or
the negative contacting portions (14a, 14b, 14c, 14d) are arranged offset in height to the connecting portion (16), wherein preferably all the negative contacting portions (14a, 14b, 14c, 14d) are arranged at the same height.

5. The cell connector (10A, 10B, 10C) according to one of the preceding claims, wherein:
the positive contact portions (12a, 12b, 12c, 12d) and the connecting portion (16) are integrally connected to each other; and/or
each positive contact portion (12a, 12b, 12c, 12d) comprises a straight strip section (17a) and a circular section (17b), preferably smoothly, merged into each other; and/or
the positive contact portions (12a, 12b, 12c, 12d) are arranged in a two-dimensional quasi-hexagonal grid.

6. The cell connector (10A, 10B, 10C) according to one of the preceding claims, wherein:
the negative contact portions (14a, 14b, 14c, 14d) and the connecting portion (16) are integrally connected to one another; and/or
each negative contact portion (14a, 14b, 14c, 14d) has a tapered free end (19); and/or
each negative contact portion (14a, 14b, 14c, 14d) has a curved shape, preferably having an inner radius of curvature (Rᵢ) between 15 mm and 17 mm.

7. The cell connector (10A, 10B, 10C) according to one of the preceding claims, wherein:
the connecting portion (16) comprises a, preferably curved and/or hook-shaped, positive arm section (16a) projecting away from a centre section (16i) of the connecting portion (16), wherein at least two of the four positive contact portions (12a, 12c) are connected to the positive arm section (16a), wherein preferably:
one (12a) of the at least two positive contact portions (12a, 12c) is connected to a distal end of the positive arm section (16a); and/or
one (12c) of the at least two positive contact portions (12a, 12c) is connected to a lateral side of the positive arm section (16a); and/or
the at least two positive contact portions (12a, 12c) each project away from the positive arm section (16a); and/or
a width (W) of the positive arm section (16a) varies along a length of the positive arm section (16a), preferably decreases with increasing distance from the centre section (16i).

8. The cell connector (10A, 10B, 10C) according to one of the preceding claims, wherein:
the connecting portion (16) comprises a, preferably curved and/or hook-shaped, negative arm section (16b) projecting away from a centre section (16i) of the connecting portion (16), wherein preferably exactly, three (14a, 14b, 14c) of the negative contact portions (14a, 14b, 14c, 14d) are connected to the negative arm section (16a), wherein preferably:
one (14a) of the three negative contact portions (14a, 14b, 14c) is connected to a distal end of the negative arm section (16b); and/or
two (14b, 14c) of three negative contact portions (14a, 14b, 14c) are connected, preferably quasi-parallel and/or next to each other, to a lateral side of the negative arm section (16b); and/or
the three negative contact portions (14a, 14b, 14c) each project away from the negative arm section (16b); and/or
a width (W) of the negative arm section (16b) varies along a length of the negative arm section (16b); and/or
the negative arm section (16b) comprises at least one arc, preferably circular arc, region (11), preferably adapted to curve at least partially around a lateral side of one of the cylindrical cells (22).

9. The cell connector (10A, 10B, 10C) according to one of the preceding claims, wherein:
the connecting portion (16) comprises a, preferably curved and/or hook-shaped, further negative arm section (16c) projecting away from a centre section (16i) of the connecting portion (16), wherein, preferably only, one (14d) of the negative contact portions (14a, 14b, 14c, 14d) is connected to the negative arm section (16a), wherein preferably:
the one negative contact portion (14d) is connected to a distal end of the further negative arm section (16c); and/or
the one negative contact portion (14d) projects away from the further negative arm section (16c); and/or
a width of the further negative arm section (16c) varies along a length of the further negative arm section (16c); and/or
the further negative arm section (16c) comprises an arc, preferably circular arc, region (11), preferably adapted to curve at least partially around a lateral side of one of the cylindrical cells (22).

10. The cell connector (10A) according to one of the preceding claims, wherein:
the connecting portion (16) comprises:
a centre section (16i), to which two (12b, 12d) of the positive contact portions (12a, 12b, 12c, 12d) are, preferably directly connected;
a positive arm section (16a) projecting away from the centre section (16i), wherein one (12a) of the positive contact portions (12a, 12b, 12c, 12d) is connected to a distal end of the positive arm section (16a) and one (12c) of the positive contact portions (12a, 12b, 12c, 12d) is connected to a lateral side of the positive arm section (16a);
a negative arm section (16b) projecting away from the centre section (16i), wherein one (14a) of the negative contact portions (14a, 14b, 14c, 14d) is connected to a distal end of the negative arm section (16b) and two (14b, 14c) of the negative contact portions (14a, 14b, 14c, 14d) are connected to a lateral side of the negative arm section (16b); and
a further negative arm section (16c) projecting away from the centre section (16i), wherein one (14d) of the negative contact portions (14a, 14b, 14c, 14d) is connected to a distal end of the further negative arm section (16c);
wherein preferably the negative arm section (16b) and the further negative arm section (16c) form a ω-shaped structure.

11. The cell connector (10B) according to one claims 1 to 9, wherein:
the connecting portion (16) comprises:
a centre section (16i);
a positive arm section (16a) projecting away from the centre section (16i), wherein one (12a) of the positive contact portions (12a, 12b, 12c, 12d) is connected to a distal end of the positive arm section (16a), one (12c) of the positive contact portions (12a, 12b, 12c, 12d)) is connected to a lateral side of the positive arm section (16a), and two (12b, 12d) of the positive contact portions (12a, 12b, 12c, 12d) are connected to an another lateral side of the positive arm section (16a) opposite to said lateral side;
a negative arm section (16b) projecting away from the centre section (16i), wherein one (14a) of the negative contact portions (14a, 14b, 14c, 14d) is connected to a distal end of the negative arm section (16b) and two (12b, 14c) of the negative contact portions (14a, 14b, 14c, 14d) are connected to a lateral side of the negative arm section (16b), and wherein the negative arm section (16b) comprises two arc, preferably circular arc, regions (11), preferably spaced apart from each other and/or each adapted to curve at least partially around a lateral side of one of the cylindrical cells (22); and
a further negative arm section (16c) projecting away from the centre section (16i), wherein one (14d) of the negative contact portions (14a, 14b, 14c, 14d) is connected to a distal end of the further negative arm section (16c);
wherein preferably the negative arm section (16b) and the further negative arm section (16c) form a ω-shaped structure.

12. The cell connector (10C) according to one of claims 1 to 9, wherein:
the connecting portion (16) comprises:
a centre section (16i);
a positive arm section (16a) projecting away from the centre section (16i), wherein one (12a) of the positive contact portions (12a, 12b, 12c, 12d) is connected to a distal end of the positive arm section (16a), one (12b) of the positive contact portions (12a, 12b, 12c, 12d) is connected to a lateral side of the positive arm section (16a), and two (12c, 12d) of the positive contact portions (12a, 12b, 12c, 12d) are connected to another lateral side of the positive arm section (16a) opposite to said lateral side, and wherein the positive arm section (16a) reverses its curvature along a length of the positive arm section (16a);
a negative arm section (16b) projecting away from the centre section (16i), wherein one (14a) of the negative contact portions (14a, 14b, 14c, 14d) is connected to a distal end of the negative arm section (16b) and two (14b, 14c) of the negative contact portions (114a, 14b, 14c, 14d) are connected to a lateral side of the negative arm section (16b); and
a further negative arm section (16c) projecting away from the centre section (16i), wherein one (14d) of the negative contact portions (14a, 14b, 14c, 14d) is connected to a distal end of the further negative arm section (16c);
wherein preferably the negative arm section (16b) and the further negative arm section (16c) form a ω-shaped structure.

13. An electrical energy storage device (20) for a vehicle, comprising:
a plurality of cylindrical cells (22), preferably cylindrical Lithium ion cells, wherein each of the cylindrical cells (22) comprises a positive terminal (22a) and a negative terminal (22b); and
a plurality of cell connectors (10A, 10B, 10C), each according to one of the preceding claims, wherein each of the plurality of cell connectors (10A, 10B, 10C) physically and electrically connects eight cylindrical cells (22) of the plurality of cylindrical cells (22) to each other, preferably such:
that the positive contact portions (12a, 12b, 12c, 12d) of each cell connector (10A, 10B, 10C) each contact a positive terminal (22a) of one of the eight cylindrical cells (22) and the negative contact portions (14a, 14b, 14c, 14d) of each cell connector (10A, 10B, 10C) each contact a negative terminal (22b) of one of the eight cylindrical cells (22).

14. The electrical energy storage device (20) according to claim 13, wherein:
the plurality of cell connectors (10A, 10B, 10C) comprises:
at least one longitudinal cell connector (10A) according to claim 10; and/or
at least one right corner cell connector (10B) according to claim 11; and/or
at least one left corner cell connector (10C) according to claim 12.

15. The electrical energy storage device (20) according to claim 13 or 14, wherein:
the plurality of cylindrical cells (22) are arranged parallel and/or are orientated identically; and/or
the electrical energy storage device (20) comprises a carrier plate, in which the plurality of cell connectors (10A, 10B, 10C) is integrated, wherein preferably, the plurality of cell connectors (10A, 10B, 10C) is over-molded into the carrier plate; and/or
the electrical energy storage device (20) comprises a battery management system (24) for monitoring the plurality of cylindrical cells (22) comprising a plurality of sensors (24a), wherein preferably one single sensor (24a) of the plurality of sensors (24a) is placed on each of the plurality of cell connectors (10A, 10B, 10C) configured to measure readings on eight cylindrical cells (22) of the plurality of cylindrical cells (22) at a time; and/or
the electrical energy storage device (20) comprises a positive end connector (26) contacting exactly four positive terminals (22a) of the plurality of cylindrical cells (22) and none of the negative terminals (22b) of the plurality of cylindrical cells (22); and/or
the electrical energy storage device (20) comprises a negative end connector (28) contacting exactly four negative terminals (22b) of the plurality of cylindrical cells (22) and none of the positive terminals (22a) of the plurality of cylindrical cells (22).
